# EUROPÄISCHE PATENTANMELDUNG

(11) **EP 2 687 826 A2**
(43) Veröffentlichungstag der Anmeldung: **22.01.2014**
(21) Anmeldenummer: 13003371.5
(22) Anmeldetag: 03.07.2013
(51) Int. Cl.: G01F 1/56

(54) **Kernmagnetisches Durchflussmessgerät**

(30) Priorität: 16.07.2012 DE 102012013934
(71) Anmelder: Krohne AG, 4019 Basel (CH)
(72) Erfinder: Pors, Jan Teunis Aart, 3262 EK Oud-Beijerland (NL); Ramondt, Jan-Willem, 4817 KL Breda (NL)
(74) Vertreter: Gesthuysen Patent- und Rechtsanwälte

(57) **Zusammenfassung**

Beschrieben und dargestellt ist ein kernmagnetisches Durchflussmessgerät (1), mit einem von einem Medium (2) durchströmbaren Messrohr (3), mit einer Signaleinrichtung (4) zum Erzeugen von das Medium (2) anregenden Signalen und / oder zum Auswerten der Signale des angeregten Mediums, mit wenigstens einer am Messrohr (3) angeordneten Signalspule (5) zum Senden der von der Signaleinrichtung (4) erzeugten Signale und / oder zum Empfangen der Signale des angeregten Mediums (2) und mit einer zwischen der Signaleinrichtung (4) und der Signalspule (5) vorgesehenen Anpasseinrichtung (6), wobei die Anpasseinrichtung (6) ein mechanisch in seinem Wert durch eine Drehbewegung einstellbares reaktives Einstellobjekt (7) und eine dem Einstellobjekt (7) zugeordnete Einstelleinrichtung (8) aufweist.

Erfindungsgemäß weist die Einstelleinrichtung (8) einen das Einstellöbjekt (7) beeinflussenden Drehsteller (9), einen auf den Drehsteller (9) einwirkenden Drehaktor (10), eine zwischen dem Drehaktor (10) und dem Drehsteller (9) vorgesehene, ein von dem Drehaktor (10) erzeugtes Drehmoment an den Drehsteller (9) übertragende Drehmomentenkupplung (11) und außerdem einen Drehanschlag (12, 13) auf.

## Beschreibung

Die Erfindung betrifft zunächst ein kernmagnetisches Durchflussmessgerät mit einem von einem Medium durchströmbaren Messrohr, mit einer Signaleinrichtung zum Erzeugen von das Medium anregenden Signalen und / oder zum Auswerten der Signale des angeregten Mediums, mit wenigstens einer am Messrohr angeordneten Signalspule zum Senden der von der Signaleinrichtung erzeugten Signale und / oder zum Empfangen der Signale des angeregten Mediums und mit einer zwischen der Signaleinrichtung und der Signalspule vorgesehenen Anpasseinrichtung, wobei die Anpasseinrichtung ein mechanisch in seinem Wert durch eine Drehbewegung einstellbares reaktives Einstellobjekt und eine dem Einstellobjekt zugeordnete Einstelleinrichtung aufweist. Die Erfindung betrifft auch eine Einstelleinrichtung für ein durch eine Drehbewegung in seinem Wert einstellbares Einstellobjekt. Schließlich betrifft die Erfindung auch ein Verfahren zum Betreiben einer Einstelleinrichtung für ein durch eine Drehbewegung in seinem Wert einstellbares Einstellobjekt.

Die Atomkerne der Elemente, die einen Kernspin besitzen, besitzen auch ein durch den Kernspin hervorgerufenes magnetisches Moment. Der Kernspin kann als ein durch einen Vektor beschreibbarer Drehimpuls aufgefasst werden, und entsprechend kann auch das magnetische Moment durch einen Vektor beschrieben werden, der parallel zum Vektor des Drehimpulses ist. Der Vektor des magnetischen Moments eines Atomkerns richtet sich bei Anwesenheit eines makroskopischen Magnetfeldes parallel zu dem Vektor des makroskopischen Magnetfeldes an der Stelle des Atomkerns aus. Dabei präzessiert der Vektor des magnetischen Moments des Atomkerns um den Vektor des makroskopischen Magnetfeldes an der Stelle des Atomkerns. Die Frequenz der Präzession wird als Larmorfrequenz ω_{L} bezeichnet und ist proportional zum Betrag der Magnetfeldstärke B. Die Larmorfrequenz berechnet sich gemäß ω_{L}=γ·*B*. Darin ist γ das gyromagnetische Verhältnis, welches für Wasserstoffatomkerne maximal ist.

Mess- und Analyseverfahren, welche die Eigenschaft der Präzession von Atomkernen mit einem magnetischen Moment bei Anwesenheit eines makroskopischen Magnetfeldes ausnutzen, werden als kernmagnetische Resonanz-Mess- oder -Analyseverfahren bezeichnet. Der englische Begriff für kernmagnetische Resonanz ist "nuclear magnetic resonance". Für gewöhnlich werden die von den präzessierenden Atomkernen unter verschiedenen Randbedingungen in einer Signalspule induzierten Spannungen als Ausgangsgröße für die Mess- und -Analyseverfahren verwendet. Ein Beispiel für Messgeräte, welche die kernmagnetische Resonanz ausnutzen, sind die kernmagnetischen Durchflussmessgeräte, die den Durchfluss des durch das Messrohr strömenden mehrphasigen Mediums messen und das Medium analysieren.

Voraussetzung für eine Analyse unter Ausnutzung kernmagnetischer Resonanz ist, dass die zu analysierenden Phasen des Mediums zu unterscheidbaren kernmagnetischen Resonanzen angeregt werden können. Die Analyse kann die Strömungsgeschwindigkeiten der einzelnen Phasen des Mediums und die relativen Anteile der einzelnen Phasen am mehrphasigen Medium umfassen. Kernmagnetische Durchflussmessgeräte können z. B. zur Analyse des aus Ölquellen geförderten mehrphasigen Mediums eingesetzt werden, eines Mediums, das im Wesentlichen aus den Phasen Rohöl, Erdgas und Salzwasser besteht, wobei alle Phasen Wasserstoffatomkerne enthalten.

Die Analyse des aus Ölquellen geförderten Mediums kann auch mit sogenannten Testseparatoren erfolgen. Diese zweigen einen kleinen Teil des geförderten Mediums ab, trennen die einzelnen Phasen des Mediums voneinander und bestimmen die Anteile der einzelnen Phasen an dem Medium. Jedoch sind Testseparatoren nicht im Stande, Rohölanteile kleiner als 5 % zuverlässig zu messen. Da der Rohölanteil einer jeden Quelle stetig absinkt und der Rohölanteil einer Vielzahl von Quellen bereits geringer als 5 % ist, ist es derzeit nicht möglich, diese Quellen unter Verwendung von Testseparatoren wirtschaftlich auszubeuten. Um auch Quellen mit einem sehr geringen Rohölanteil weiterhin ausbeuten zu können, sind also entsprechend genaue Durchflussmessgeräte erforderlich.

Kernmagnetische Durchflussmessgeräte können den Anforderungen einer Vielzahl von Anwendungen genügen, wie zum Beispiel bei der Messung des Durchflusses des aus einer Quelle geförderten mehrphasigen Mediums durch das Messrohr und bei der Bestimmung der Anteile von Rohöl, Erdgas und Salzwasser in dem Medium. Auch Rohölanteile geringer als 5 % sind mit kernmagnetischen Durchflussmessgeräten messbar.

Aus dem, was eingangs ausgeführt ist, ergibt sich, dass zu einem kernmagnetischen Durchflussmessgerät funktionsnotwendig gehören eine Magnetisierungseinrichtung, eine Signaleinrichtung, eine Signalspule und eine zwischen der Signaleinrichtung und der Signalspule vorgesehene Anpasseinrichtung.

Im Übrigen ergibt sich aus dem, was zuvor zur physikalischen Funktionsweise kernmagnetischer Durchflussmessgeräte ausgeführt ist, ohne Weiteres die Funktion der Magnetisierungseinrichtung, die Funktion der Signaleinrichtung und die Funktion der Signalspule. Der Erläuterung bedarf die Funktion der zwischen der Signaleinrichtung und der Signalspule vorgesehenen Anpasseinrichtung.

Sowohl die Signaleinrichtung als auch die Signalspule haben jeweils eine Doppelfunktion. Die Signaleinrichtung dient dem Erzeugen von das Medium anregenden Signalen und dem Auswerten der Signale des angeregten Mediums. Die Signalspule dient dem Senden der von der Signaleinrichtung erzeugten Signale in das Medium und zum Empfangen der Signale des angeregten Mediums. Anders ausgedrückt, haben also sowohl die Signaleinrichtungen als auch die Signalspule jeweils einen Ausgang und einen Eingang, und sind der Ausgang der Signaleinrichtung mit dem Eingang der Signalspule und der Ausgang der Signalspule mit dem Eingang der Signaleinrichtung verbunden.

Wenn zuvor ausgeführt worden ist, dass sowohl die Signaleinrichtung als auch die Signalspule jeweils einen Ausgang und einen Eingang haben, dann ist das nicht unbedingt schaltungstechnisch, sondern nur funktional gemeint. Tatsächlich können sowohl bei der Signaleinrichtung als auch bei der Signalspule schaltungstechnisch Ausgang und Eingang "zusammenfallen", weil nämlich das Empfangen der Signale des angeregten Mediums zeitversetzt zum Senden der das Medium anregenden Signale erfolgt.

Die zwischen der Signaleinrichtung und der Signalspule vorgesehene Anpasseinrichtung dient nun dazu, die Ausgangsimpedanz der Signaleinrichtung an die Eingangsimpedanz der Signalspule beziehungsweise die Eingangsimpedanz der Signalspule an die Ausgangsimpedanz der Signaleinrichtung anzupassen sowie die Ausgangsimpedanz der Signalspule an die Eingangsimpendanz der Signaleinrichtung beziehungsweise die Eingangsimpedanz der Signaleinrichtung an die Ausgangsimpedanz der Signalspule anzupassen. Im Übrigen dient die Anpasseinrichtung auch der Frequenzanpassung, das heißt der Anpassung der Resonanzfrequenz der Signalspule an die Sendefrequenz der Signaleinrichtung beziehungsweise die Sendefrequenz der Signaleinrichtung an die Resonanzfrequenz der Signalspule.

Eingangs ist ausgeführt, dass bei dem in Rede stehenden kernmagnetischen Durchflussmessgerät die Anpasseinrichtung ein mechanisch in ihrem Wert durch eine Drehbewegung einstellbares reaktives Einstellobjekt aufweist. Tatsächlich können zu der Anpasseinrichtung nicht nur ein einstellbares reaktives Einstellobjekt gehören, es können auch mehrere, unterschiedliche reaktive Einstellobjekte zu der Anpasseinrichtung gehören. Zu der Anpasseinrichtung können also ein Kondensator oder mehrere Kondensatoren oder / und eine Spule oder mehrere Spulen gehören. Auch kann die Anpasseinrichtung einen Widerstand oder mehrere Widerstände aufweisen. Nachfolgend, ohne jede Einschränkung, wird immer davon ausgegangen, dass die Anpasseinrichtung als durch eine Drehbewegung einstellbares reaktives Einstellobjekt nur einen Drehkondensator aufweist.

Zu dem erfindungsgemäßen kernmagnetischen Durchflussmessgerät gehört, wie ausgeführt, auch und vor allem eine dem Einstellobjekt zugeordnete Einstelleinrichtung.

Der Erfindung liegt nun zunächst die Aufgabe zugrunde, das in Rede stehende kernmagnetische Durchflussmessgerät mit einer für die erläuterte Funktion besonders geeigneten Einstelleinrichtung zu versehen.

Das erfindungsgemäße kernmagnetische Durchflussmessgerät ist nun zunächst und im Wesentlichen dadurch gekennzeichnet, dass die Einstelleinrichtung einen das Einstellobjekt beeinflussenden Drehsteller, einen auf den Drehsteller einwirkenden Drehaktor, eine zwischen dem Drehaktor und dem Drehsteller vorgesehene, ein von dem Drehaktor erzeugtes Drehmoment an den Drehsteller übertragende Drehmomentenkupplung und einen Drehanschlag aufweist. Dabei kann als Drehaktor ein Elektromotor vorgesehen sein, insbesondere ein Schrittmotor.

Das erfindungsgemäße kernmagnetische Durchflussmessgerät kann in verschiedener Weise ausgestaltet und weitergebildet werden, insbesondere in Bezug auf die das Durchflussmessgerät kennzeichnende Einstelleinrichtung.

Zunächst empfiehlt es sich, bei der das erfindungsgemäße kernmagnetische Durchflussmessgerät kennzeichnenden Einstelleinrichtung die Drehmomentenkupplung so auszugestalten, dass das vom Drehaktor auf den Drehsteller - und damit schlussendlich das auf das Einstellobjekt - übertragbare Drehmoment auf ein Maximaldrehmoment begrenzt wird. Dazu kann die Drehmomentenkupplung als Rutschkupplung ausgeführt sein. Besonders bevorzugt ist jedoch eine Ausführungsform, bei der die Drehmomentenkupplung als Sicherheitskupplung ausgeführt ist, vorzugsweise als Sicherheitskupplung mit einer winkelsynchronen Wiedereinrastung.

Eingangs ist ausgeführt, dass die Erfindung auch eine Einstelleinrichtung für ein durch eine Drehbewegung in seinem Wert einstellbares Einstellobjekt betrifft. Die bei dem erfindungsgemäßen kernmagnetischen Durchflussmessgerät erfindungsgemäß vorgesehene Einstelleinrichtung hat also Bedeutung nicht nur in Verbindung mit einem kernmagnetischen Durchflussmessgerät, sondern auch darüber hinaus.

Einstelleinrichtungen kommen in verschiedenen Anwendungen zum Einsatz. Eine Einstelleinrichtung wirkt durch Variation eines Prozessparameters im weitesten Sinne auf mindestens eine Prozessgröße eines Prozesses ein. Oftmals weist eine Einstelleinrichtung einen Drehsteller auf, dessen Drehstellung innerhalb eines Drehbereichs mit der Größe des Prozessparameters korrespondiert. Übliche Drehbereiche reichen von weniger als einer Umdrehung bis hin zu einer Vielzahl von Umdrehungen. In der Regel ist der Drehbereich zumindest an einem Ende durch einen Drehanschlag mechanisch begrenzt, und oftmals ist der Drehbereich an beiden Enden durch Drehanschläge mechanisch begrenzt. Das Überdrehen des Drehstellers über einen Drehanschlag hinaus ist mit einem im Vergleich zum Drehen des Drehstellers innerhalb des Drehbereichs erhöhten Drehmoment möglich. Das Überdrehen des Drehstellers über einen Drehanschlag hinaus kann jedoch das Einstellobjekt beschädigen oder zerstören.

Einstelleinrichtungen der in Rede stehenden Art sind in der Elektrotechnik z. B. Drehpotentiometer und Drehkondensatoren. Bei einem Drehpotentiometer korrespondiert die Drehstellung des Drehstellers mit der Größe des Widerstands zwischen zwei elektrischen Anschlüssen des Drehpotentiometers. Mit einem Drehpotentiometer kann beispielsweise die Gleichsignalverstärkung eines Operationsverstärkers eingestellt werden. Bei einem Drehkondensator korrespondiert die Drehstellung des Drehstellers mit der Größe der Kapazität zwischen zwei elektrischen Anschlüssen des Drehkondensators. Ein Drehkondensator kann beispielsweise zur Abstimmung eines elektrischen Schwingkreises eingesetzt werden.

Die Drehstellung des Drehstellers einer durch Variation eines Prozessparameters auf mindestens eine Prozessgröße wirkenden Einstelleinrichtung, die mit einem geeigneten Wert mindestens einer der Prozessgrößen korrespondiert, wird oftmals durch Variation des Prozessparameters und durch die Bestimmung und Auswertung mindestens einer der Prozessgrößen ermittelt. Die Kenntnis der quantitativen Abhängigkeit der mindestens einen Prozessgröße von der Drehstellung ist nicht erforderlich. Das Finden des geeigneten Werts mindestens einer der Prozessgrößen eines Prozesses beginnt zumeist mit der Drehstellung des Drehstellers an einem Drehanschlag.

Vielfach erfolgt die Drehung des Drehstellers einer Einstelleinrichtung nicht manuell, sondern durch einen Drehaktor, wobei die Drehung des Drehaktors auf den Drehsteller übertragen wird. Bei Einsatz eines Drehaktors ist sicherzustellen, dass das von dem Drehaktor erzeugte Drehmoment zur Drehung des Drehstellers ausreichend groß ist und dass der ein Drehmoment erzeugende Drehaktor die Einstelleinrichtung nicht beschädigt. Eine Beschädigung kann insbesondere dann auftreten, wenn die Drehstellung des Drehstellers an einem Drehanschlag ist und der Drehaktor weiter ein Drehmoment erzeugt.

Aus dem Stand der Technik sind Einstelleinrichtungen bekannt, bei denen die Drehstellung des Drehstellers durch eine Überwachungsvorrichtung verfolgt wird. Durch die Kenntnis der aktuellen Drehstellung des Drehstellers und der Position des Drehanschlags kann der Drehsteller durch den Drehaktor an den Drehanschlag gedreht werden, ohne dass die Gefahr einer Beschädigung oder gar einer Zerstörung der Einstelleinrichtung und insbesondere des Drehanschlags durch das vom Drehaktor aufgebrachte Drehmoment droht. Kommen ein Gleichstrommotor oder ein Synchronmotor als Drehaktor zum Einsatz, umfasst die Überwachungsvorrichtung für gewöhnlich einen Drehgeber, z. B. in der Art eines Inkrementalgebers oder Absolutwertgebers, der die Drehstellung des Drehstellers durch elektrische Signale wiedergibt. Kommt ein Schrittmotor zum Einsatz, werden oftmals nur die Ansteuersignale des Schrittmotors ausgewertet. Unabhängig von der gewählten Umsetzung ist zusätzlich eine Elektronik zur Auswertung der die Drehstellung wiedergebenden Signale erforderlich und bedeutet die Überwachungsvorrichtung einen bedeutenden Aufwand und die Notwendigkeit der Speicherung insbesondere der aktuellen Drehstellung. Daher versagen die aus dem Stand der Technik bekannten Einstelleinrichtungen, wenn die Kenntnis der aktuellen Drehstellung verloren geht. Das kann z. B. durch einen Stromausfall geschehen. Auch kann die Drehstellung bei der Inbetriebnahme unbekannt sein. Ist die Drehstellung unbekannt, besteht wieder die Gefahr, dass der Drehaktor die Einstelleinrichtung und insbesondere den Drehanschlag durch das von ihm erzeugte Drehmoment beschädigt oder gar zerstört, da der Drehaktor nicht abgeschaltet wird, wenn die Drehstellung des Drehstellers den Drehanschlag erreicht hat.

Gegenstand der Erfindung ist eine Einstelleinrichtung, die, wie weiter oben beschrieben, das erfindungsgemäße kernmagnetische Durchflussmessgerät kennzeichnet, auch mit den diese Einstelleinrichtung weiterbildenden und ausgestaltenden Merkmalen, wonach die Drehmomentenkupplung das vom Drehaktor auf den Drehsteller übertragbare Drehmoment auf ein Maximaldrehmoment begrenzt, wonach die Drehmomentenkupplung eine Rutschkupplung sein kann, vorzugsweise eine Sicherheitskupplung sein kann, und wonach dann, wenn die Drehmomentenkupplung eine Sicherheitskupplung ist, die Sicherheitskupplung eine winkelsynchrone Wiedereinrastung aufweisen kann.

Ist bei der erfindungsgemäßen Einstelleinrichtung die Drehmomentenkupplung eine Rutschkupplung, so begrenzt diese das zwischen dem Drehaktor und dem Drehsteller übertragbare Drehmoment auf das Maximaldrehmoment.

Überschreitet das vom Drehaktor kommende Drehmoment das Maximaldrehmoment, so tritt Schlupf zwischen dem Drehaktor und dem Drehsteller auf, ein Schlupf, der die Rutschkupplung nicht beschädigt.

Statt als Drehmomentenkupplung eine Rutschkupplung vorzusehen, kann es sich empfehlen, als Drehmomentenkupplung eine Sicherheitskupplung vorzusehen, insbesondere eine solche, die eine winkelsynchrone Wiedereinrastung aufweist.

Ist bei der erfindungsgemäßen Einstellrichtung als Drehmomentenkupplung eine Rutschkupplung vorgesehen, so wirkt dann, wenn der Drehanschlag eine weitere Drehung des Drehstellers verhindert, gleichwohl auf den Drehsteller das Maximaldrehmoment, und zwar so lange, wie der Drehaktor arbeitet. Ist jedoch als Drehmomentenkupplung eine Sicherheitskupplung vorgesehen, so trennt die Sicherheitskupplung den Drehsteller vom Drehaktor dann, wenn eine weitere Drehbewegung des Drehstellers durch den Drehanschlag verhindert ist. Das Maximaldrehmoment wirkt also auf den Drehsteller nur solange, bis die Sicherheitskupplung angesprochen hat.

Gegenstand der Erfindung ist auch, wie eingangs ausgeführt, ein Verfahren zum Betreiben einer Einstelleinrichtung für ein durch eine Drehbewegung in seinem Wert einstellbares Einstellobjekt. Dieses Verfahren ist erfindungsgemäß dadurch gekennzeichnet, dass das zwischen dem Drehaktor und dem Drehsteller übertragbare Drehmoment auf ein Maximaldrehmoment begrenzt wird, dass beim Überscheiten des Maximaldrehmoments zwischen dem Drehaktor und dem Drehteller Schlupf realisiert wird und dass von dem Drehaktor eine Drehung ausgeführt wird, deren Größe wenigstens dem Drehbereich des Drehstellers entspricht.

Bei der Bestimmung des Maximaldrehmoments werden alle Bauteile der Einstelleinrichtung berücksichtigt, die von dem vom Drehaktor erzeugten Drehmoment beansprucht werden. Es werden also nicht nur das Drehmoment, sondern auch mit dem Drehmoment einhergehende Kräfte berücksichtigt. Insbesondere werden die Beanspruchungen des Drehaktors selbst und des Drehanschlags berücksichtigt. Auch werden nicht-mechanische Beanspruchungen, wie die thermische Beanspruchung des Drehaktors bei fortdauernder Erzeugung des Maximaldrehmoments, berücksichtigt.

Da normalerweise zunächst die Drehstellung des Drehstellers nicht bekannt ist, muss zur zuverlässigen Drehung des Drehstellers an den Drehanschlag der Drehaktor eine Drehung wenigstens in der Größe des Drehbereichs des Drehstellers ausführen können. Eine Drehung des Drehaktors, die größer, auch wesentlich größer als der Drehbereich des Drehstellers ist, ist unkritisch, da bei einer Drehung des Drehaktors, die größer als der Drehbereich des Drehstellers ist, Schlupf zwischen dem Drehaktor und dem Drehsteller realisiert wird, zum Beispiel durch eine Rutschkupplung oder durch eine Sicherheitskupplung,

Die Größe der Drehung, die vom Drehaktor ausgeführt wird, kann aus der Drehgeschwindigkeit und der Einschaltdauer des Drehaktors bestimmt werden. Eine Messeinrichtung zur Messung der Größe der Drehung, beispielsweise ein Drehgeber, ist nicht erforderlich. Soll das erfindungsgemäße Verfahren bei Einstelleinrichtungen mit sich in der Größe der Drehbereiche unterscheidenden Einstellobjekten verwendet werden, so kann die Größe der Drehung des Drehaktors auf den größten Drehbereich abgestimmt werden.

Selbstverständlich kann bei der erfindungsgemäßen Einstelleinrichtung und bei dem erfindungsgemäßen Verfahren der Drehbereich nicht nur an einem Ende durch einen Drehanschlag begrenzt sein, vielmehr kann der Drehbereich auch zusätzlich an dem anderen Ende durch einen Drehanschlag begrenzt sein.

Die erfindungsgemäße Einstelleinrichtung und das erfindungsgemäße Verfahren können auch in Verbindung mit Anlagen, Maschinen, Vorrichtungen, Einrichtungen usw. eingesetzt werden, die sicherheitstechnisch problematisch sein können, bei denen also ein den Sollwert des Einstellobjektes um ein bestimmtes Maß unterschreitender oder überschreitender Istwert zu einem Sicherheitsproblem führen kann. Folglich geht eine weitere Lehre der Erfindung mit besonderer Bedeutung dahin, dass der Drehaktor zunächst den Drehsteller in Richtung auf den Drehanschlag dreht, bei dem der Istwert des Einstellobjektes sicherheitstechnisch problemlos ist. Dieser Drehanschlag wird nachfolgend auch als Sicherheits-Drehanschlag bezeichnet.

Sind die erfindungsgemäße Einstelleinrichtung oder / und das erfindungsgemäße Verfahren so realisiert, wie das zuvor im Einzelnen beschrieben ist, dann wird zweckmäßigerweise die entsprechende Anlage, Maschine, Vorrichtung oder Einrichtung zeitgestaffelt in Betrieb genommen. Nach einem ersten Inbetriebnahmeschritt ist die Anlage, die Maschine, die Vorrichtung oder die Einrichtung selbst noch nicht "eingeschaltet", also noch "passiv", und der Drehaktor dreht den Drehsteller in Richtung auf den Sicherheits-Drehanschlag. Hat der Drehaktor den Drehsteller bis an den Sicherheits-Drehanschlag gedreht, folgt der zweite Inbetriebnahmeschritt. Bei diesem zweiten Inbetriebnahmeschritt wird die Anlage, die Maschine, die Vorrichtung oder die Einrichtung "eingeschaltet", also "aktiviert", und der Drehaktor dreht den Drehsteller solange, bis das Einstellobjekt den Sollwert erreicht hat.

Im Einzelnen gibt es verschiedene Möglichkeiten, die Erfindung zu realisieren; das gilt sowohl in Bezug auf das erfindungsgemäße kernmagnetische Durchflussmessgerät als auch auf die erfindungsgemäße Einstelleinrichtung beziehungsweise das erfindungsgemäße Verfahren. Dazu wird verwiesen einerseits auf die nebengeordneten Patentansprüche und auf die den nebengeordneten Patentansprüchen nachgeordneten Patentansprüche und andererseits auf das, was nachfolgend in Verbindung mit der Zeichnung beschrieben wird. In der Zeichnung zeigen:
- Fig. 1: sehr schematisch den grundsätzlichen Aufbau eines kernmagnetischen Durchflussmessgeräts und
- Fig. 2: auch sehr schematisch den grundsätzlichen Aufbau einer bei dem kernmagnetischen Durchflussmessgerät nach Fig. 1 verwirklichten Einstelleinrichtung.

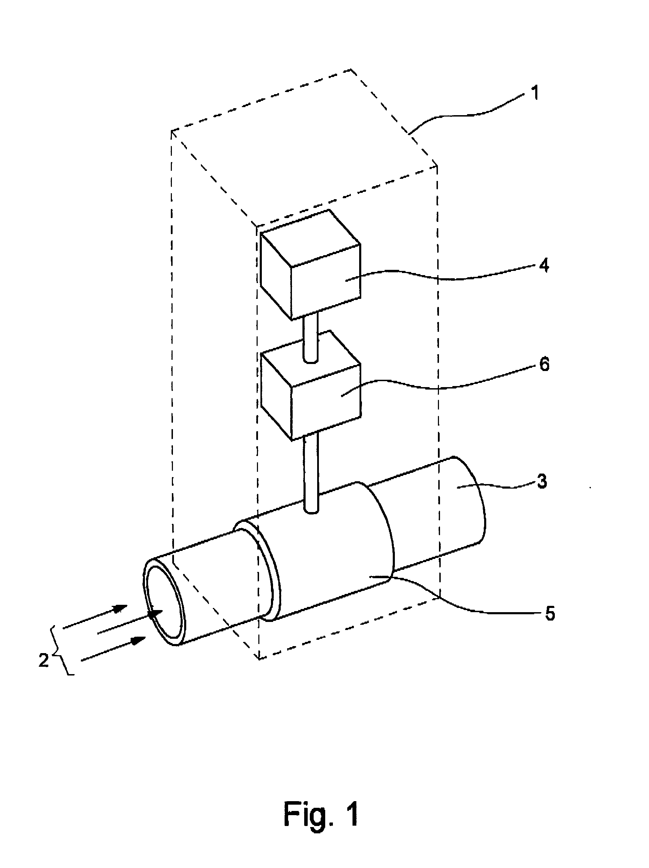

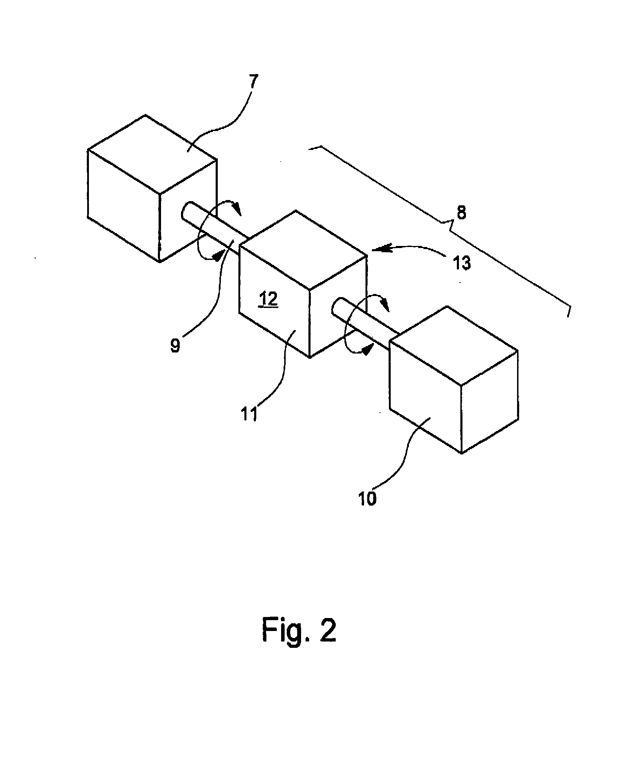

Das kernmagnetische Durchflussmessgerät 1, in der Fig. 1 nur sehr schematisch angedeutet, weist auf ein von einem Medium 2 durchströmbares Messrohr 3, eine nicht dargestellte, auch nicht angedeutete Magnetisierungseinrichtung, eine Signaleinrichtung 4 zum Erzeugen von das Medium 2 anregenden Signalen und zum Auswerten der Signale des angeregten Mediums 2, eine am Messrohr 3 angeordnete Signalspule 5 zum Senden der von der Signaleinrichtung 4 erzeugten Signale und zum Empfangen der Signale des angeregten Mediums 2 und eine zwischen der Signaleinrichtung 4 und der Signalspule 5 vorgesehenen Anpasseinrichtung 6, die, wie das erfindungsgemäße kernmagnetische Durchflussmessgerät 1 insgesamt, in Fig. 1 nur schematisch angedeutet, in Fig. 2 nur in Bezug auf wesentliche Bauteile angedeutet ist. Die Anpasseinrichtung 6 weist ein in seinem Wert durch eine Drehbewegung einstellbares reaktives Einstellobjekt 7 und eine dem Einstellobjekt 7 zugeordnete Einstelleinrichtung 8 auf. Bei dem Einstellobjekt 7 kann es sich insbesondere, was aber nicht dargestellt ist, um einen Drehkondensator handeln.

Die in Fig. 2 nur schematisch, ihrem grundsätzlichen Aufbau nach dargestellte, bei dem Durchflussmessgerät nach Fig. 1 verwendete Einstelleinrichtung 8 weist auf einen das Einstellobjekt 7 beeinflussenden Drehsteller 9, einen auf den Drehsteller 9 einwirkenden Drehaktor 10, eine zwischen dem Drehaktor 10 und dem Drehsteller 9 vorgesehene, ein von dem Drehaktor 10 erzeugtes Drehmoment an den Drehsteller 9 übertragende Drehmomentenkupplung 11 und mindestens einen Drehanschlag 12, vorzugsweise auch einen zweiten Drehanschlag 13. Der Drehaktor 10 kann, was nicht dargestellt ist, als Elektromotor, vorzugsweise als Schrittmotor ausgeführt sein. Nicht dargestellt ist, dass die Drehmomentenkupplung 11 als Rutschkupplung, vorzugsweise jedoch als Sicherheitskupplung ausgeführt sein kann. Schließlich sind die Drehanschläge 12, 13 nur angedeutet, also auch im Einzelnen nicht dargestellt.

Sind die erfindungsgemäße Einstelleinrichtung 8 so realisiert, wie das zuvor beschrieben ist, dann wird zweckmäßigerweise die entsprechende Anlage, Maschine, Vorrichtung oder Einrichtung, zu der die erfindungsgemäße Einstelleinrichtung 8 gehört, zum Beispiel also das erfindungsgemäße kernmagnetische Durchflussmessgerät 1, zeitgestaffelt in Betrieb genommen. Es wird also nach einem ersten Inbetriebnahmeschritt die Anlage, die Maschine, die Vorrichtung oder die Einrichtung, zum Beispiel das kernmagnetische Durchflussmessgerät 1, selbst noch nicht "eingeschaltet". Vielmehr dreht zunächst nach dem ersten Inbetriebnahmeschritt der Drehaktor 10 den Drehsteller 11 in Richtung auf den ersten Drehanschlag 12, den Sicherheits-Drehanschlag. Hat der Drehaktor 10 den Drehsteller 9 bis an den Drehanschlag 12, also den Sicherheits-Drehanschlag gedreht, folgt der zweite Inbetriebnahmeschritt. Dabei beziehungsweise danach wird also die Anlage, die Maschine, die Vorrichtung oder die Einrichtung, zum Beispiel das kernmagnetische Durchflussmessgerät 1, "eingeschaltet", also "aktiviert", und der Drehaktor 10 dreht den Drehsteller 9 solange, bis das Einstellobjekt 7 den Sollwert erreicht hat.

### Bezugszeichen:

- 1.: Kernmagnetisches Durchflussmessgerät,
- 2.: Medium,
- 3.: Messrohr,
- 4.: Signaleinrichtung,
- 5.: Signalspule,
- 6.: Anpasseinrichtung,
- 7.: Einstellobjekt,
- 8.: Einstelleinrichtung,
- 9.: Drehsteller,
- 10.: Drehaktor,
- 11.: Drehmomentenkupplung,
- 12.: Drehanschlag,
- 13.: Drehanschlag

## Patentansprüche

1. Kernmagnetisches Durchflussmessgerät mit einem von einem Medium (2) durchströmbaren Messrohr (3), mit einer Signaleinrichtung (4) zum Erzeugen von das Medium (2) anregenden Signalen und / oder zum Auswerten der Signale des angeregten Mediums, mit wenigstens einer am Messrohr (3) angeordneten Signalspule (5) zum Senden der von der Signaleinrichtung (4) erzeugten Signale und / oder zum Empfangen der Signale des angeregten Mediums (2) und mit einer zwischen der Signaleinrichtung (4) und der Signalspule (5) vorgesehenen Anpasseinrichtung (6), wobei die Anpasseinrichtung (6) ein mechanisch in seinem Wert durch eine Drehbewegung einstellbares reaktives Einstellobjekt (7) und eine dem Einstellobjekt (7) zugeordnete Einstelleinrichtung (8) aufweist,
**dadurch gekennzeichnet,**
**dass** die Einstelleinrichtung (8) einen das Einstellobjekt (7) beeinflussenden Drehsteller (9), einen auf den Drehsteller (9) einwirkenden Drehaktor (10), eine zwischen dem Drehaktor (10) und dem Drehsteller (9) vorgesehene, ein von dem Drehaktor (10) erzeugtes Drehmoment an den Drehsteller (9) übertragende Drehmomentenkupplung (11) und einen Drehanschlag (12, 13) aufweist.

2. Kernmagnetisches Durchflussmessgerät nach Anspruch 1, **dadurch gekennzeichnet, dass** die Drehmomentkupplung (11) das vom Drehaktor (10) auf den Drehsteller (9) übertragbare Drehmoment auf ein Maximaldrehmoment begrenzt.

3. Kernmagnetisches Durchflussmessgerät nach Anspruch 2, **dadurch gekennzeichnet, dass** die Drehmomentenkupplung (11) als Rutschkupplung ausgeführt ist.

4. Kernmagnetisches Durchflussmessgerät nach Anspruch 3, **dadurch gekennzeichnet, dass** die Drehmomentenkupplung (11) als Sicherheitskupplung ausgeführt ist.

5. Kernmagnetisches Durchflussmessgerät nach Anspruch 4, **dadurch gekennzeichnet, dass** die Drehmomentenkupplung (11) eine winkelsynchrone Wiedereinrastung aufweist.

6. Einstelleinrichtung für ein durch eine Drehbewegung in seinem Wert einstellbares Einstellobjekt (7),
**dadurch gekennzeichnet,**
**dass** ein das Einstellobjekt (7) beeinflussender Drehsteller (9), ein auf den Drehsteller (9) einwirkender Drehaktor (10) und eine zwischen dem Drehaktor (10) und dem Drehsteller (9) vorgesehene, ein von dem Drehaktor (10) erzeugtes Drehmoment an den Drehsteller (9) übertragende Drehmomentenkupplung (11) vorgesehen ist.

7. Einstelleinrichtung nach Anspruch 6, **dadurch gekennzeichnet, dass** die Drehmomentenkupplung (11) das vom Drehaktor (10) auf den Drehsteller (9) übertragbare Drehmoment auf ein Maximaldrehmoment begrenzt.

8. Einstelleinrichtung nach Anspruch 7, **dadurch gekennzeichnet, dass** die Drehmomentenkupplung (11) als Rutschkupplung ausgeführt ist.

9. Einstelleinrichtung nach Anspruch 7, **dadurch gekennzeichnet, dass** die Drehmomentenkupplung (11) als Sicherheitskupplung ausgeführt ist

10. Einstelleinrichtung nach Anspruch 9, **dadurch gekennzeichnet, dass** die - als Sicherheitskupplung ausgeführt - Drehmomentenkupplung (11) eine winkelsynchrone Wiedereinrastung aufweist.

11. Verfahren zum Betreiben einer Einstelleinrichtung (8) für ein durch eine Drehbewegung in seinem Wert einstellbares Einstellobjekt (7),
**dadurch gekennzeichnet,**
**dass** das zwischen dem Drehaktor (10) und dem Drehsteller (9) übertragbare Drehmoment auf ein Maximaldrehmoment begrenzt wird, dass beim Überschreiten des Maximaldrehmoments zwischen dem Drehaktor (10) und dem Drehsteller (9) Schlupf realisiert wird und dass von dem Drehaktor (10) eine Drehung ausgeführt wird, deren Größe wenigstens dem Drehbereich des Drehstellers (9) entspricht.

12. Verfahren nach Anspruch 11, **dadurch gekennzeichnet, dass** die Drehung des Drehaktors (10) an einem Ende des Drehbereichs, vorzugsweise an beiden Enden des Drehbereichs durch einen Drehanschlag (12, 13) begrenzt wird.

13. Verfahren nach Anspruch 12, **dadurch gekennzeichnet, dass** zeitgestaffelt gearbeitet wird, nämlich nach einem ersten Inbetriebnahmeschritt die entsprechende Anlage, Maschine, Vorrichtung oder Einrichtung selbst noch nicht "eingeschaltet" wird, also noch "passiv" ist, und der Drehaktor (10) den Drehsteller (9) in Richtung auf den Drehanschlag (12), der als Sicherheits-Drehanschlag wirksam ist, dreht und das dann, wenn der Drehaktor (10) den Drehsteller (9) bis an den Drehanschlag (12), der als Sicherheits-Drehanschlag wirksam ist, gedreht hat, der zweite Inbetriebnahmeschritt erfolgt, also dann die Anlage, die Maschine, die Vorrichtung oder die Einrichtung "eingeschaltet", also "aktiviert" wird und der Drehaktor (10) den Drehsteller (9) solange dreht, bis das Einstellobjekt (7) den Sollwert erreicht hat.
